# EUROPEAN PATENT APPLICATION

(11) **EP 4 800 792 A1**
(43) Date of publication of application: **02.09.2026**
(21) Application number: 24887246.7
(22) Date of filing: 05.03.2024
(51) Int. Cl.: H01M 10/054, H01M 4/133, H01M 10/0567, H01M 4/62

(54) **SODIUM SECONDARY BATTERY AND ELECTRIC DEVICE**

(30) Priority: 09.11.2023 CN 202311485871
(71) Applicant: Contemporary Amperex Technology Co., Limited, Ningde, Fujian 352100 (CN)
(72) Inventor: WU, Kai, Ningde, Fujian 352100 (CN); TIE, Zhiwei, Ningde, Fujian 352100 (CN); ZOU, Hailin, Ningde, Fujian 352100 (CN); CHEN, Peipei, Ningde, Fujian 352100 (CN)
(74) Representative: Gong, Jinping
(86) International application number: PCT/CN2024/080085
(87) International publication number: WO 2025/097620

(57) **Abstract**

Provided are a sodium secondary battery and an electric device. The sodium secondary battery comprises a negative electrode sheet and an electrolyte, wherein the negative electrode sheet comprises a negative electrode active material; the ratio of the actual specific discharge capacity of the negative electrode active material measured by means of a three-stage step-by-step discharge method, which comprises first discharging at a rate of 0.05C within a voltage interval of 1.0-0.5 V and subsequent discharging at currents of 40 µA and 10 µA, to the theoretical specific discharge capacity of the negative electrode active material is a; the electrolyte comprises a first component, the first component is a fluorocarbonate compound, and the mass ratio of the fluorocarbonate compound is b based on the total mass of the electrolyte; and a and b satisfy: 1 ≤ a/b ≤ 270. The sodium secondary battery has a reduced volume expansion rate after high-temperature storage, and improved low-temperature charging performance and cycling stability.

## Description

### CROSS-REFERENCE

The present application claims priority to Chinese Patent Application No. 202311485871.2 filed on November 09, 2023 and entitled "SODIUM SECONDARY BATTERY AND ELECTRIC DEVICE", which is incorporated herein by reference in its entirety.

### TECHNICAL FIELD

The present application relates to the technical field of secondary batteries, and in particular, to a sodium secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. With the widespread application of secondary batteries, higher demands are being placed on their cycle performance and service life.

In terms of resources and cost, sodium secondary batteries hold greater advantages over lithium secondary batteries. However, sodium secondary batteries suffer from significant gas production, which limits their further application.

### SUMMARY

The present application is made in view of the above problems, and an objective thereof is to provide a sodium secondary battery for reducing the gas production of the sodium secondary battery and improving the cycling stability of the battery.

A first aspect of the present application provides a sodium secondary battery. The sodium secondary battery includes a negative electrode plate and an electrolytic solution. The negative electrode plate includes a negative electrode active material; a ratio of an actual discharge-specific capacity of the negative electrode active material measured by using a three-stage stepwise discharge method in which the material is first discharged at a rate of 0.05C and then discharged at currents of 40 µA and 10 µA in a voltage range of 1.0 V to 0.5 V to a theoretical discharge-specific capacity of the negative electrode active material is a. The electrolytic solution includes a first component, the first component is a fluorinated carbonate compound, a mass proportion of the fluorinated carbonate compound is b based on a total mass of the electrolytic solution, and a and b satisfy: 1 ≤ a/b ≤ 270, optionally 1 ≤ a/b ≤ 100.

The solid electrolyte interphase film (SEI film) on the surface of the negative electrode is prone to dissolution or decomposition in the voltage range of 1.0 V to 0.5 V, so that the negative electrode is exposed to the electrolytic solution for a reaction. The solvent molecules are easy to produce gas after decomposition on the surface of the electrode plate, so that the battery exhibits a high expansion rate, and soluble byproducts are produced. The byproducts cause irreversible side reactions, which reduce the cycling stability and kinetic performance of the whole system. The higher the actual discharge-specific capacity of the negative electrode active material in the voltage range of 1.0 V to 0.5 V, the more SEI films will be formed due to hard carbon defects and surface functional groups during sodium absorption, and the more dissolution or decomposition of the SEI film occurs in the discharging process when the negative electrode voltage is in the voltage range of 1.0 V to 0.5 V. The fluorinated carbonate compound exhibits reduced LUMO energy by means of the electron-withdrawing effect of the fluorine atom, and can be reduced on the surface of the negative electrode in a relatively high voltage range of 1.0 V to 0.5 V to form an SEI film, so as to compensate for the increase in gas production and the decrease in cycling stability of the battery caused by the decomposition of the SEI film.

The negative electrode plate and the electrolytic solution with the value of a/b within an appropriate range can improve the stability of the SEI film through mutual cooperation, thereby reducing the gas production of the secondary battery and improving the kinetic performance and cycling stability of the battery. When a and b in the secondary battery satisfy 1 ≤ a/b ≤ 100, the volume expansion rate, the low-temperature charging performance, and the room-temperature cycle capacity retention rate of the battery are further improved.

In any embodiment, the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is 9 mAh/g to 140 mAh/g, optionally 18 mAh/g to 70 mAh/g.

When the actual discharge-specific capacity of the negative electrode active material in the voltage range of 1.0 V to 0.5 V is within an appropriate range, the battery exhibits a low gas production rate, and excellent kinetic performance and cycling stability. A negative electrode plate in which the actual discharge-specific capacity of the negative electrode active material in the voltage range of 1.0 V to 0.5 V is 18 mAh/g to 70 mAh/g can balance low gas production, high cycling stability, and high energy density.

In any embodiment, based on the total mass of the electrolytic solution, the mass proportion b of the fluorinated carbonate compound is 0.05% to 10%, optionally 0.2% to 10%.

Based on the total mass of the electrolytic solution, when the mass proportion b of the fluoroethylene carbonate in the electrolytic solution is 0.05% to 10%, the battery exhibits a low battery volume expansion rate after high-temperature storage, and excellent low-temperature charging performance and room-temperature cycle capacity retention rate. When the mass proportion b of the fluoroethylene carbonate in the electrolytic solution is 0.2% to 10%, the volume expansion rate of the battery after high-temperature storage can be further reduced, and the low-temperature charging performance and the room-temperature cycle capacity retention rate can be improved.

In any embodiment, the fluorinated carbonate compound includes a compound represented by formula I,

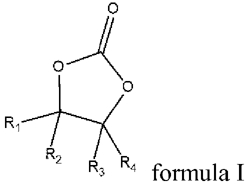

where R₁, R₂, R₃, and R₄ each independently include at least one of a hydrogen atom, a halogen atom, C₁₋₆ hydrocarbyl, C₁₋₃ haloalkyl, C₁₋₃ alkoxy, C₁₋₃ haloalkoxy, an ester group, cyano, a sulfonic acid group, and an isocyanate group; at least one of R₁, R₂, R₃, and R₄ is a fluorine atom.

Cyclic fluorinated carbonates with at least one of R₁, R₂, R₃, and R₄ being a fluorine atom are prone to ring-opening, forming an SEI film on the surface of the negative electrode, which reduces the gas production of the battery and improves the kinetic performance and cycling stability of the battery.

In any embodiment, the fluorinated carbonate compound includes at least one of the following compounds: 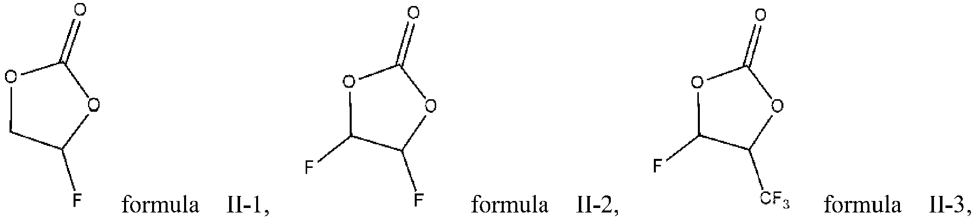 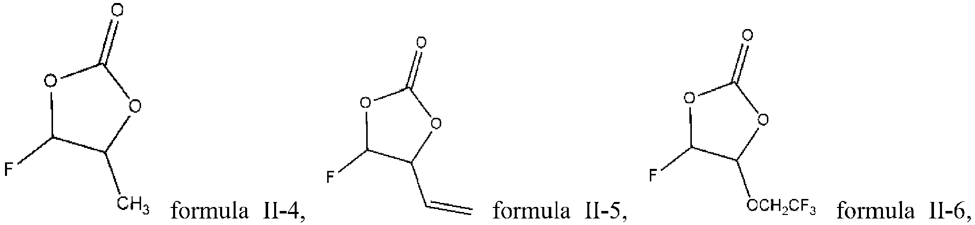 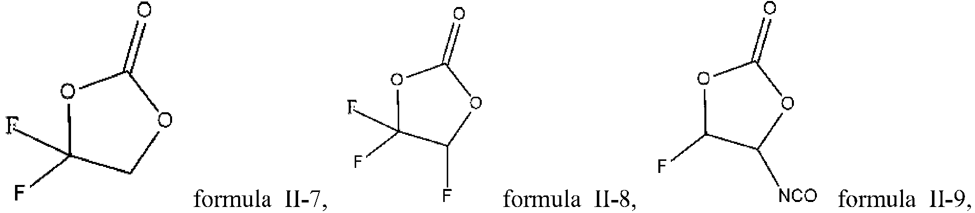 and

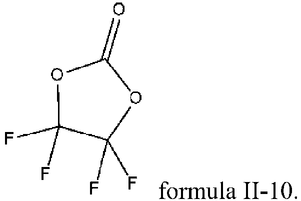

In any embodiment, the negative electrode plate includes a negative electrode film layer, and the negative electrode film layer contains a calcium element.

The introduction of the calcium element into the negative electrode film layer can induce the deposition of sodium ions, help inhibit the formation of sodium dendrites, and reduce the oxidation and gas production of unstable components generated by the sodium dendrites in the negative electrode, thereby reducing the gas production of the negative electrode in the discharging process, and reducing the volume expansion rate of the battery after high-temperature storage.

In any embodiment, based on a total mass of the negative electrode film layer, a mass proportion of the calcium element in the negative electrode film layer is d, the ratio of the actual discharge-specific capacity of the negative electrode active material measured by using the three-stage stepwise discharge method in which the material is first discharged at the rate of 0.05C and then discharged at the currents of 40 µA and 10 µA in a voltage range of 0.1 V to 0.005 V to the theoretical discharge-specific capacity of the negative electrode active material is c, and d and c satisfy: 2.5 × 10⁻⁶ ≤ d/c ≤ 4.5 × 10⁻³, optionally 5.5 × 10⁻⁵ ≤ d/c ≤ 3.1 × 10⁻³.

Different from lithium secondary batteries, sodium secondary batteries often use hard carbon as their negative electrode active material. The capacity performance of the hard carbon mainly includes two stages. The capacity at 1.5 V to 0.1 V (vs Na/Na⁺) in the first stage is derived from the adsorption process of Na⁺ at the surface defects of the hard carbon, and the capacity contribution at 0.1 V or less (vs Na/Na⁺) in the second stage is derived from the filling process of Na⁺ in the hard carbon micropores. To increase the capacity of the negative electrode, the porosity in the hard carbon is often increased in the prior art. However, the potential of Na⁺ in the filling process of hard carbon micropores is close to the potential of sodium metal deposition (0 V). In the charging process, sodium precipitation is easily caused. The precipitated sodium dendrites are highly reactive and react rapidly with the electrolytic solution to produce a large amount of gas and unstable byproducts. These unstable substances are prone to oxidative decomposition due to insufficient film-forming driving force as the potential of the negative electrode increases in the discharging process. In addition, unstable organic byproducts are easily dissolved in the electrolytic solution, so that the SEI film is constantly in the cyclical process of dissolution and repair, which exacerbates the gas production and the deterioration of the cycling stability of the battery.

The calcium element in the negative electrode film layer can induce the deposition of sodium ions in the negative electrode, which helps inhibit the formation of sodium dendrites, thereby reducing unstable components generated by the sodium dendrites. When the value of d/c is within an appropriate range, the calcium element in the negative electrode film layer cooperates with the active material in the negative electrode plate, so that the secondary battery exhibits a low gas production rate, high kinetic performance, and cycling stability while maintaining high capacity and high energy density.

In any embodiment, based on a total mass of the negative electrode film layer, a mass proportion d of the calcium element in the negative electrode film layer is 2 ppm to 3000 ppm, optionally 40 ppm to 2300 ppm.

When the mass proportion d of the calcium element in the negative electrode film layer is within an appropriate range, not only can the negative effect of an excessively high content of the calcium element on the capacity and impedance of the secondary battery be reduced, but also the effect of the calcium element for inhibiting dendrites and reducing gas production can be fully exerted, so that the low-temperature charging performance and the room-temperature cycle capacity retention rate of the battery can be improved while the gas production of the battery is reduced. When the mass proportion d of the calcium element in the negative electrode film layer is 40 ppm to 2300 ppm, the gas production rate of the battery is further reduced, and the cycling stability is further improved.

In any embodiment, the actual discharge-specific capacity of the negative electrode active material measured by using the three-stage stepwise discharge method in which the material is first discharged at the rate of 0.05C and then discharged at the currents of 40 µA and 10 µA in a voltage range of 0.1 V to 0.005 V is 100 mAh/g to 300 mAh/g, optionally 200 mAh/g to 250 mAh/g.

When the actual discharge-specific capacity of the negative electrode active material in the voltage range of 0.1 V to 0.005 V is within an appropriate range, the gas production of the battery after high-temperature storage can be reduced, and the kinetic performance and cycling stability of the battery can be improved. When the actual discharge-specific capacity of the negative electrode active material in the voltage range of 0.1 V to 0.005 V is 200 mAh/g to 250 mAh/g, both a high energy density and low gas production of the battery can be further balanced.

In any embodiment, the negative electrode active material includes hard carbon.

In any embodiment, the sodium secondary battery further includes a positive electrode plate, and the positive electrode plate includes a positive electrode active material.

In any embodiment, the positive electrode active material further includes a copper element, and based on a total mass of the positive electrode active material, a mass proportion of the copper element is 0.01% to 23%, optionally 6.5% to 18%.

The positive electrode active material containing the copper element possesses a more stable structure, and thus can further improve the cycling stability of the battery.

When the mass proportion of the copper element is within an appropriate range, the cycling stability of the battery is improved without accelerating the decomposition of the electrolytic solution under the high oxidability and thus deteriorating the gas production of the battery due to the conversion of the copper element into Cu³⁺ at a high voltage. The mass proportion of the copper element is in the range of 6.5% to 18%, which can further balance both low gas production and high cycling stability of the secondary battery.

In any embodiment, the positive electrode active material includes a sodium transition metal oxide, and the sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0 < m ≤ 1, 0 ≤ n ≤ 0.5, 0 ≤ o < 0.5, 0 ≤ p ≤ 0.5, 0 < q ≤ 0.68, n + o + p + q = 1, and 0 ≤ s < 0.2.

In some embodiments, the sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

The positive electrode active material sodium transition metal oxide has a high voltage. The anionic oxygen in the sodium transition metal oxide produces a large amount of proton hydrogen while contributing to the capacity, which accelerates the oxidation and gas production of the unstable components of the negative electrode, leading to severe gas production on the negative electrode side. Through the combined action of the negative electrode plate provided in the examples of the present application and the fluorinated carbonate compound in the electrolytic solution, the gas production of the battery can be effectively reduced while the battery capacity and energy density are improved.

In any embodiment, the electrolytic solution further includes a second component, and the second component is one or more of vinylene carbonate, vinyl ethylene carbonate, 1,3-propanesultone, 1,3-propenesultone, ethylene sulfate, maleic anhydride, succinic anhydride, sodium difluoro(oxalato)borate, triallyl phosphate, sodium bis(oxalato)borate, sodium tetrafluoro(oxalato)phosphate, sodium difluorobis(oxalato)phosphate, sodium difluorophosphate, and sodium fluorosulfonate.

The component of the SEI film formed at the interface of the negative electrode in the sodium secondary battery mainly includes sodium alkyl carbonate and sodium carbonate. However, compared with lithium alkyl carbonate, sodium alkyl carbonate has higher solubility in the solvent for the electrolytic solution, which makes the SEI film of the sodium secondary battery very unstable. The electrolytic solution continuously undergoes side reactions with the negative electrode, resulting in poor cycle performance of the secondary battery. The second component containing an unsaturated functional group can be reduced to a film prior to the solvent at the negative electrode, cooperate with the fluorinated carbonate compound to jointly inhibit the formation of easily soluble substances such as sodium alkyl carbonate, and act together with the negative electrode plate, thereby reducing the gas production of the battery and improving the cycling stability of the battery.

In any embodiment, based on the total mass of the electrolytic solution, a mass proportion of the second component is 0.01% to 10%, optionally 0.1% to 5%.

When the mass proportion of the second component is within the above range, the thickness of the SEI film can be controlled while the gas production of the battery is improved, thereby achieving both low impedance and low gas production of the battery.

A second aspect of the present application further provides an electric device. The electric device includes the sodium secondary battery according to the first aspect of the present application.

### BRIEF DESCRIPTION OF THE DRAWINGS

FIG. 1 is a schematic view of a test for charge and discharge curves of a negative electrode plate according to one embodiment of the present application;
FIG. 2 is a schematic view of a secondary battery according to one embodiment of the present application;
FIG. 3 is an exploded view of the secondary battery according to one embodiment of the present application shown in FIG. 2;
FIG. 4 is a schematic view of a battery module according to one embodiment of the present application;
FIG. 5 is a schematic view of a battery pack according to one embodiment of the present application;
FIG. 6 is an exploded view of the battery pack according to one embodiment of the present application shown in FIG. 5; and
FIG. 7 is a schematic view of an electric device using a secondary battery as a power source according to one embodiment of the present application.

### Description of the reference numerals:

1: battery pack; 2: upper case body; 3: lower case body; 4: battery module; 5: sodium secondary battery; 51: housing; 52: electrode assembly; 53: cover plate.

### DETAILED DESCRIPTION

Hereinafter, embodiments of the sodium secondary battery and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

It is widely recognized in the prior art that the gas production of sodium secondary batteries primarily stems from the oxidation of the electrolytic solution by the positive electrode active material at high voltages. Therefore, in the prior art, a solution of coating the positive electrode active material and forming a film on the surface of the positive electrode is often used to reduce the gas production of secondary batteries. During research, the applicant found that another important factor for gas production of the sodium secondary batteries lies in the negative electrode. The solid electrolyte interphase (SEI film) on the surface of the negative electrode plays a key role in reducing the gas production of the negative electrode. However, during the battery charging and discharging cycle, the SEI film is in the cyclical process of dissolution and repair, which tends to cause gas production and cycling stability deterioration of the battery.

### [Sodium Secondary Battery]

Based on this, the present application provides a sodium secondary battery. The sodium secondary battery includes a negative electrode plate and an electrolytic solution. The negative electrode plate includes a negative electrode active material; the ratio of the actual discharge-specific capacity of the negative electrode active material measured by using a three-stage stepwise discharge method in which the material is first discharged at the rate of 0.05C and then discharged at currents of 40 µA and 10 µA in the voltage range of 1.0 V to 0.5 V to the theoretical discharge-specific capacity of the negative electrode active material is a. The electrolytic solution includes a first component, the first component includes a fluorinated carbonate compound, the mass proportion of the fluorinated carbonate compound is b based on the total mass of the electrolytic solution, and a and b satisfy: 1 ≤ a/b ≤ 270. In some embodiments, a and b satisfy: 1 ≤ a/b ≤ 100.

The sodium secondary battery is a secondary battery that primarily works by the movement of sodium ions between the positive electrode and the negative electrode.

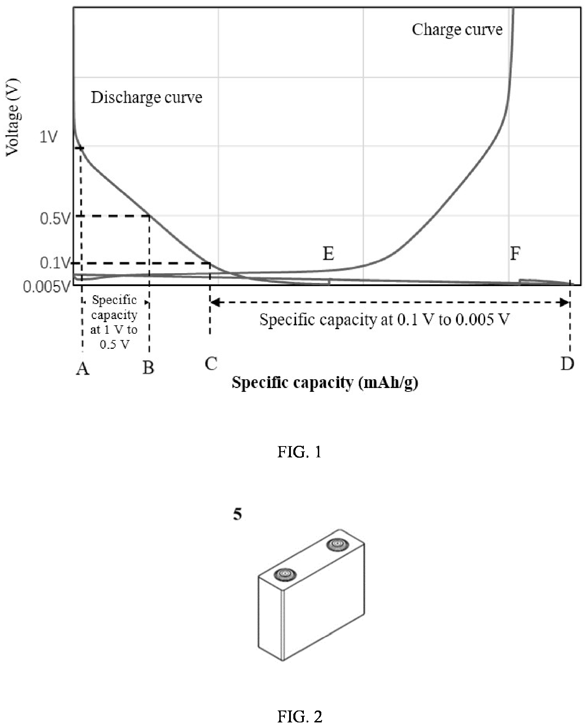

The actual discharge-specific capacity of the negative electrode active material may be measured by using charge and discharge curves of the button battery. The test method adopts a three-stage stepwise discharge method: discharging at the rate of 0.05C first, and then discharging at currents of 40 µA and 10 µA to reduce the phenomenon of incomplete capacity performance caused by polarization under a large-rate discharge. As an example of the three-stage stepwise discharge method, a negative electrode plate in a sodium secondary battery was punched into small discs with a diameter of 14 mm to be used as a positive electrode in a button battery, and a sodium metal sheet was used as a negative electrode. A 1.3 mol/L sodium hexafluorophosphate solution was used as an electrolytic solution, and solvents in the electrolytic solution included ethylene carbonate, dimethyl carbonate, and ethyl methyl carbonate in a mass ratio of 1:2:2. The button battery was assembled and subjected to a constant current charging and discharging test in the voltage range of 0.005 V to 2 V. The schematic view of charge and discharge curves is shown in FIG. 1. In the discharging process, the battery was discharged to 0.005 V at a constant current rate of 0.05C, discharged to 0.005 V at a constant current rate of 40 µA after standing until the voltage returned to a stable value E, and discharged to 0.005 V at a constant current rate of 10 µA after standing until the voltage returned to a stable value F; the battery was charged to 2 V at a constant current rate of 0.05C in the charging process. In the second charging and discharging cycle, the total capacity (mAh) in the discharging process in the voltage range of 1.0 V to 0.5 V is divided by the mass (g) of the negative electrode active material in the negative electrode plate, and this is denoted as the actual discharge-specific capacity (mAh/g) of the negative electrode active material at 1.0 V to 0.5 V. As shown in FIG. 1, the difference between a specific capacity B corresponding to 0.5 V and a specific capacity A corresponding to 1 V in the discharge curve is the actual discharge-specific capacity (mAh/g) of the negative electrode active material in the voltage range of 1.0 V to 0.5 V. The charge and discharge curves can be measured by any electrochemical testing system in the art. As an example, the charge and discharge curves are obtained by testing using a CT3002A 1U model testing system from Land Electronics.

In some embodiments, the negative electrode active material includes hard carbon, and the theoretical discharge-specific capacity thereof is 300 mAh/g.

The fluorinated carbonate compound refers to a compound containing a carbonate group (-OC(O)O-) in which at least one hydrogen atom is substituted with a fluorine atom. It may be a linear compound or a cyclic compound.

The organic component of the solid electrolyte interphase film (SEI film) on the surface of the negative electrode is prone to dissolution or decomposition in the voltage range of 1.0 V to 0.5 V, so that the negative electrode is exposed to the electrolytic solution for a reaction. The solvent molecules undergo continuous reductive decomposition on the surface of the electrode plate to produce gas, so that the battery exhibits a high expansion rate, and soluble byproducts are produced. The byproducts cause irreversible side reactions, which reduce the cycling stability and kinetic performance of the whole system. The higher the actual discharge-specific capacity of the negative electrode active material in the voltage range of 1.0 V to 0.5 V, the more SEI films will be formed due to hard carbon defects and surface functional groups during sodium absorption, and the more dissolution or decomposition of the SEI film occurs in the discharging process when the negative electrode voltage is in the voltage range of 1.0 V to 0.5 V. The fluorinated carbonate compound can enhance the electron-accepting capability of the central atom by means of the electron-withdrawing effect of the fluorine atom, and is reduced on the surface of the negative electrode in a relatively high voltage range of 1.0 V to 0.5 V to form an SEI film, so as to compensate for the increase in gas production and the decrease in cycling stability of the battery caused by the decomposition of the SEI film.

In some embodiments, the value of a/b is optionally 1, 1.3, 2.7, 3, 5, 6.1, 10, 13.3, 15, 20, 23.3, 30, 40, 46.7, 50, 60, 66.7, 70, 80, 90, 100, 150, 200, 250, 266.7, 270, or in a numerical range between any two values.

The negative electrode plate and the electrolytic solution within the above ranges can improve the stability of the SEI film through mutual cooperation, thereby reducing the gas production of the secondary battery and improving the kinetic performance and cycling stability of the battery. When a and b in the secondary battery satisfy 1 ≤ a/b ≤ 100, the volume expansion rate, the low-temperature charging performance, and the room-temperature cycle capacity retention rate of the battery are further improved.

In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is 9 mAh/g to 140 mAh/g. In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is 18 mAh/g to 70 mAh/g.

In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is optionally 9 mAh/g, 15 mAh/g, 18 mAh/g, 20 mAh/g, 30 mAh/g, 40 mAh/g, 50 mAh/g, 60 mAh/g, 70 mAh/g, 80 mAh/g, 90 mAh/g, 100 mAh/g, 110 mAh/g, 120 mAh/g, 130 mAh/g, 140 mAh/g, or any numerical value therebetween.

The actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V may be regulated and controlled by changing the preparation process of the negative electrode active material. Hard carbon is used as an example. The defect degree and the porosity of the surface of the negative electrode active material are adjusted by changing the pyrolysis temperature, so as to achieve regulation and control of the capacity of the negative electrode active material in different voltage ranges. Increasing the pyrolysis temperature of the hard carbon helps reduce surface defects, reduce sodium adsorption, and reduce the actual discharge-specific capacity thereof in the voltage range of 1.0 V to 0.5 V.

The batteries within the above ranges exhibit a low gas production rate, and excellent kinetic performance and cycling stability. A negative electrode plate in which the actual discharge-specific capacity of the negative electrode active material in the voltage range of 1.0 V to 0.5 V is 18 mAh/g to 70 mAh/g can balance low gas production, high cycling stability, and high energy density.

In some embodiments, based on the total mass of the electrolytic solution, the mass proportion b of the fluorinated carbonate compound is 0.05% to 10%. In some embodiments, based on the total mass of the electrolytic solution, the mass proportion b of the fluorinated carbonate compound is 0.2% to 10%.

In some embodiments, based on the total mass of the electrolytic solution, the mass proportion b of the fluorinated carbonate compound is optionally 0.05%, 0.1%, 0.2%, 0.5%, 1%, 2%, 3%, 4%, 5%, 6%, 7%, 8%, 9%, 10%, or any numerical value therebetween.

Based on the total mass of the electrolytic solution, when the mass proportion b of the fluoroethylene carbonate in the electrolytic solution is 0.05% to 10%, the battery exhibits a low battery volume expansion rate after high-temperature storage, and excellent low-temperature charging performance and room-temperature cycle capacity retention rate. Based on the total mass of the electrolytic solution, when the mass proportion b of the fluoroethylene carbonate in the electrolytic solution is 0.2% to 10%, the volume expansion rate of the battery after high-temperature storage can be further reduced, and the low-temperature charging performance and the room-temperature cycle capacity retention rate can be improved.

In some embodiments, the fluorinated carbonate compound includes a compound represented by formula I,

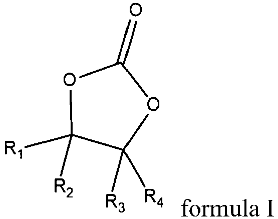

where R₁, R₂, R₃, and R₄ each independently include at least one of a hydrogen atom, a halogen atom, C₁₋₆ hydrocarbyl, C₁₋₃ haloalkyl, C₁₋₃ alkoxy, C₁₋₃ haloalkoxy, an ester group, cyano, a sulfonic acid group, and an isocyanate group; at least one of R₁, R₂, R₃, and R₄ is a fluorine atom.

As used herein, the term "halogen atom" refers to elements in Group VIIA of the periodic table, including but not limited to: F, Cl, Br, and I.

As used herein, the term "C₁₋₆ hydrocarbyl" refers to a group containing carbon and hydrogen atoms and including 1 to 6 carbon atoms. In some embodiments, C₁₋₆ hydrocarbyl does not include unsaturated bonds and is alkyl. As an example, it includes, but is not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, tert-butyl, pentyl, isopentyl, neopentyl, and hexyl. In some embodiments, C₁₋₆ hydrocarbyl includes unsaturated bonds and is cycloalkyl, alkenyl, alkynyl, or aryl. As an example, it includes, but is not limited to, cyclopropyl, cyclobutyl, vinyl, 1-propenyl or 2-propenyl, phenyl, or naphthyl.

As used herein, the term "C₁₋₃ haloalkyl" refers to a C₁₋₃ alkyl group where at least one hydrogen atom is substituted with a halogen atom. As an example, it includes, but is not limited to: -CF₃, -CF₂CH₂, and -CF₂CH₂CH₃.

As used herein, the term "C₁₋₃ alkoxy" refers to C₁₋₃ alkyl linked to a main carbon chain via an oxygen atom. As an example, it includes, but is not limited to: methoxy (CH₃O-), ethoxy (C₂H₅O-), and propoxy (C₃H₇O-).

As used herein, the term "C₁₋₃ haloalkoxy" refers to a C₁₋₃ alkoxy group where at least one hydrogen atom is substituted with a halogen atom.

As used herein, the term "ester group" refers to a -COO- group.

As used herein, the term "cyano" refers to a -CN group.

As used herein, the term "sulfonic acid group" refers to a -SO₃H group.

As used herein, the term "isocyanate group" refers to a -NCO group.

Cyclic fluorinated carbonates with at least one of R₁, R₂, R₃, and R₄ being a fluorine atom are prone to ring-opening, forming an SEI film on the surface of the negative electrode, which reduces the gas production of the battery and improves the kinetic performance and cycling stability of the battery.

In some embodiments, the fluorinated carbonate compound includes at least one of the following compounds: 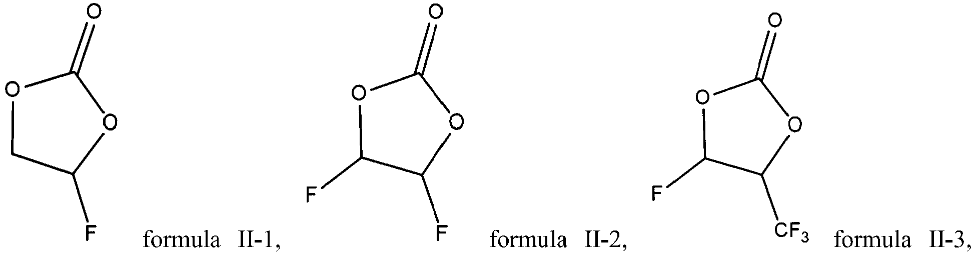 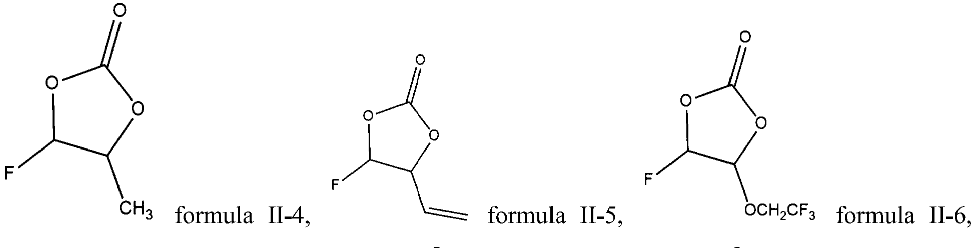 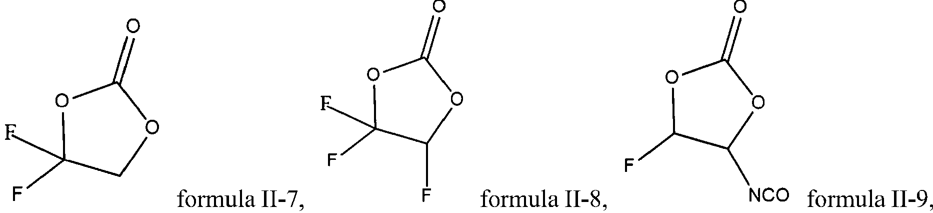 and

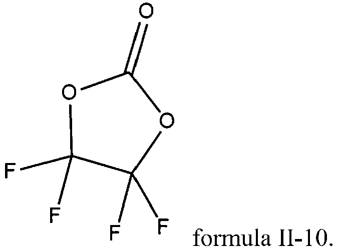

In some embodiments, the negative electrode plate includes a negative electrode film layer, and the negative electrode film layer contains a calcium element.

It can be understood that the calcium element may be introduced into the negative electrode film in any form. In some embodiments, the calcium element is introduced into the negative electrode film in the form of a calcium oxide or a calcium salt. In some embodiments, the calcium element is introduced into the negative electrode film in the form of CaO.

The introduction of the calcium element into the negative electrode film layer can induce the deposition of sodium ions, help inhibit the formation of sodium dendrites, and reduce the oxidation and gas production of unstable components generated by the sodium dendrites in the negative electrode, thereby reducing the gas production of the negative electrode in the discharging process, and reducing the volume expansion rate of the battery after high-temperature storage.

In some embodiments, based on the total mass of the negative electrode film layer, the mass proportion of the calcium element in the negative electrode film layer is d, the ratio of the actual discharge-specific capacity of the negative electrode active material measured by using the three-stage stepwise discharge method in which the material is first discharged at the rate of 0.05C and then discharged at the currents of 40 µA and 10 µA in the voltage range of 0.1 V to 0.005 V to the theoretical discharge-specific capacity of the negative electrode active material is c, and d and c satisfy: 2.5 × 10⁻⁶ ≤ d/c ≤ 4.5 × 10⁻³. In some embodiments, d and c satisfy: 5.5 × 10⁻⁵ ≤ d/c ≤ 3.1 × 10⁻³.

In some embodiments, the value of d/c is optionally 2.5 × 10⁻⁶, 3 × 10⁻⁶, 4.5 × 10⁻⁶, 1.0 × 10⁻⁵, 1.1 × 10⁻⁵, 1.3 × 10⁻⁵, 1.4 × 10⁻⁵, 5.5 × 10⁻⁵, 1.0 × 10⁻⁴, 1.2 × 10⁻⁴, 1.4 × 10⁻⁴, 1.5 × 10⁻⁴, 3.0 × 10⁻⁴, 4.0 × 10⁻⁴, 5.0 × 10⁻⁴, 6.0 × 10⁻⁴, 7.0 × 10⁻⁴, 8.0 × 10⁻⁴, 9.0 × 10⁻⁴, 1.0 × 10⁻³, 2.0 × 10⁻³, 3.0 × 10⁻³, 4.0 × 10⁻³, 4.5 × 10⁻³, or any numerical value therebetween.

The actual discharge-specific capacity of the negative electrode active material may be measured by using charge and discharge curves of the button battery. The test method adopts a three-stage stepwise discharge method: discharging at the rate of 0.05C first, and then discharging at currents of 40 µA and 10 µA to reduce the phenomenon of incomplete capacity performance caused by polarization under a large-rate discharge. As an example, a negative electrode plate in a sodium secondary battery was punched into small discs with a diameter of 14 mm to be used as a positive electrode in a button battery, and a sodium metal sheet was used as a negative electrode. A 1.3 mol/L sodium hexafluorophosphate solution was used as an electrolytic solution, and solvents in the electrolytic solution included ethylene carbonate, dimethyl carbonate, and ethyl methyl carbonate in a mass ratio of 1:2:2. The button battery was assembled and subjected to a constant current charging and discharging test in the voltage range of 0.005 V to 2 V. The schematic view of charge and discharge curves is shown in FIG. 1. In the discharging process, the battery was discharged to 0.005 V at a constant current rate of 0.05C, discharged to 0.005 V at a constant current rate of 40 µA after standing until the voltage returned to a stable value E, and discharged to 0.005 V at a constant current rate of 10 µA after standing until the voltage returned to a stable value F; the battery was charged to 2 V at a constant current rate of 0.05C in the charging process. In the second charging and discharging cycle, the total capacity in the discharging process in the voltage range of 0.1 V to 0.005 V is divided by the mass of the negative electrode active material in the negative electrode plate, and this is denoted as the actual discharge-specific capacity (mAh/g) of the negative electrode active material at 0.1 V to 0.005 V. As shown in FIG. 1, the difference between a specific capacity D corresponding to discharging to 0.005 V at a constant current rate of 10 µA and a specific capacity C corresponding to 0.1 V in the discharge curve is the actual discharge-specific capacity (mAh/g) of the negative electrode plate in the voltage range of 0.1 V to 0.005 V.

In some embodiments, the negative electrode active material includes hard carbon, and the theoretical discharge-specific capacity thereof is 300 mAh/g.

Different from lithium secondary batteries, sodium secondary batteries often use hard carbon as their negative electrode active material. The capacity performance of the hard carbon mainly includes two stages. The capacity at 1.5 V to 0.1 V (vs Na/Na⁺) in the first stage is derived from the adsorption process of Na⁺ at the surface defects of the hard carbon, and the capacity contribution at 0.1 V or less (vs Na/Na⁺) in the second stage is derived from the filling process of Na⁺ in the hard carbon micropores. To increase the capacity of the negative electrode, the porosity in the hard carbon is often increased in the prior art. However, the potential of Na⁺ in the filling process of hard carbon micropores is close to the potential of sodium metal deposition (0 V). In the charging process, sodium precipitation is easily caused. The precipitated sodium dendrites are highly reactive and react rapidly with the electrolytic solution to produce a large amount of gas and unstable byproducts. These unstable substances are prone to oxidative decomposition due to insufficient film-forming driving force as the potential of the negative electrode increases in the discharging process. In addition, unstable organic byproducts are easily dissolved in the electrolytic solution, so that the SEI film is constantly in the cyclical process of dissolution and repair, which exacerbates the gas production and the deterioration of the cycling stability of the battery.

The calcium element in the negative electrode film layer can induce the deposition of sodium ions in the negative electrode, which helps inhibit the formation of sodium dendrites, thereby reducing unstable components generated by the sodium dendrites. When the value of d/c is within an appropriate range, the calcium element in the negative electrode film layer cooperates with the active material in the negative electrode plate, so that the secondary battery exhibits a low gas production rate, high kinetic performance, and good cycling stability while maintaining high capacity and high energy density.

In some embodiments, based on the total mass of the negative electrode film layer, the mass proportion d of the calcium element in the negative electrode film layer is 2 ppm to 3000 ppm. In some embodiments, based on the total mass of the negative electrode film layer, the mass proportion d of the calcium element in the negative electrode film layer is 40 ppm to 2300 ppm.

In some embodiments, based on the total mass of the negative electrode film layer, the mass proportion d of the calcium element in the negative electrode film layer is 2 ppm, 10 ppm, 40 ppm, 80 ppm, 100 ppm, 200 ppm, 300 ppm, 400 ppm, 500 ppm, 600 ppm, 700 ppm, 800 ppm, 900 ppm, 1000 ppm, 1500 ppm, 2000 ppm, 2300 ppm, 2500 ppm, 3000 ppm, or any numerical value therebetween.

As used herein, ppm means parts per million.

When the mass proportion d of the calcium element in the negative electrode film layer is within an appropriate range, not only can the negative effect of an excessively high proportion of the calcium element on the capacity and impedance of the secondary battery be reduced, but also the effect of the calcium element for inhibiting dendrites and reducing gas production can be fully exerted, so that the low-temperature charging performance and the room-temperature cycle capacity retention rate of the battery can be improved while the gas production of the battery is reduced. When the mass proportion d of the calcium element in the negative electrode film layer is 40 ppm to 2300 ppm, the gas production rate of the battery is further reduced, and the cycling stability is further improved.

In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 0.1 V to 0.005 V is 100 mAh/g to 300 mAh/g. In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 0.1 V to 0.005 V is 200 mAh/g to 250 mAh/g.

In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 0.1 V to 0.005 V may be 100 mAh/g, 150 mAh/g, 200 mAh/g, 250 mAh/g, 300 mAh/g, or any numerical value therebetween.

The actual discharge-specific capacity of the negative electrode active material in the voltage range of 0.1 V to 0.005 V may be regulated and controlled by changing the preparation process of the negative electrode active material. Hard carbon is used as an example. The pore size and the content of the negative electrode active material are adjusted by changing the pyrolysis temperature, so as to achieve regulation and control of the capacity of the negative electrode material in different voltage ranges. Increasing the temperature in the pyrolysis process helps induce the formation of ordered micropores in the hard carbon, and increase the actual discharge-specific capacity of the negative electrode active material in the voltage range of 0.1 V to 0.005 V.

When the actual discharge-specific capacity of the negative electrode active material in the voltage range of 0.1 V to 0.005 V is within an appropriate range, the gas production of the battery after high-temperature storage can be reduced, and the kinetic performance and cycling stability of the battery can be improved. When the actual discharge-specific capacity of the negative electrode active material in the voltage range of 0.1 V to 0.005 V is 200 mAh/g to 250 mAh/g, both a high energy density and low gas production of the battery can be further balanced.

In some embodiments, the negative electrode active material includes one or more of hard carbon, sodium metal, sodium-tin alloy, and metal oxide.

In some embodiments, the negative electrode active material includes hard carbon.

In some embodiments, the hard carbon is a negative electrode active material with a particle size of 1 µm to 50 µm, prepared by performing primary calcination on a biomass material in an inert environment at 600 °C to 1000 °C for 1 h to 5 h, followed by grinding for 1 h to 4 h, and then performing secondary calcination in an inert environment at 1100 °C to 1800 °C for 2 h to 8 h.

In some embodiments, the biomass material includes one or more of peanut shells, straws, sawdust, walnut shells, sugarcane bagasse, rice husks, wheat husks, coconut shells, apricot shells, wood, lignin, and papermaking residue.

In some embodiments, the temperature for the primary calcination is optionally 600 °C, 700 °C, 800 °C, 900 °C, 1000 °C, or in a numerical range between any two values.

In some embodiments, the grinding time is optionally 1 h, 2 h, 3 h, 4 h, or in a numerical range between any two values.

In some embodiments, the time for the primary calcination is optionally 1 h, 2 h, 3 h, 4 h, 5 h, or in a numerical range between any two values.

In some embodiments, the temperature for the secondary calcination is optionally 1100 °C, 1200 °C, 1300 °C, 1400 °C, 1500 °C, 1600 °C, 1700 °C, 1800 °C, or in a numerical range between any two values.

In some embodiments, the time for the secondary calcination is optionally 2 h, 3 h, 4 h, 5 h, 6 h, 7 h, 8 h, or in a numerical range between any two values.

In some embodiments, the particle size of the hard carbon is 1 µm, 5 µm, 10 µm, 20 µm, 30 µm, 40 µm, 50 µm, or in a numerical range between any two values.

In some embodiments, the sodium secondary battery further includes a positive electrode plate, the positive electrode plate includes a positive electrode film layer, and the positive electrode film layer includes a positive electrode active material.

In some embodiments, the positive electrode active material further includes a copper element. Based on the total mass of the positive electrode active material, the mass proportion of the copper element is 0.01% to 23%, optionally 6.5% to 18%.

In some embodiments, based on the total mass of the positive electrode active material, the mass proportion of the copper element is 0.01%, 4%, 6.5%, 10%, 13%, 15%, 18%, 20%, 23%, or in a numerical range between any two values.

The positive electrode active material containing the copper element possesses a more stable structure, and thus can further improve the cycling stability of the battery.

When the mass proportion of the copper element is within an appropriate range, the cycling stability of the battery is improved without accelerating the decomposition of the electrolytic solution under the high oxidability and thus sharply deteriorating the gas production of the battery due to the conversion of the copper element into Cu³⁺ at a high voltage. The mass proportion of the copper element is in the range of 6.5% to 18%, which can further balance both low gas production and high cycling stability of the secondary battery.

In some embodiments, a positive electrode active material for use in batteries known in the art may be used as the positive electrode active material. As an example, the positive electrode active material may include at least one of the following materials: a Prussian blue analog, a sodium-containing phosphate, a sodium-containing transition metal oxide, and respective modified compounds thereof. However, the present application is not limited to these materials, and other conventional materials that can be used as positive electrode active materials for batteries may also be used. These positive electrode active materials may be used alone or in combination of two or more. The Prussian blue analog is NaₓP[R(CN)₆]_{δ}·zH₂O, where P and R are each independently selected from at least one of transition metal elements, 0 < x ≤ 2, 0 < δ ≤ 1, and 0 ≤ z ≤ 10; the sodium-containing phosphate is Na_{b}Me_{c}(PO₄)_{d}O₂X, where A is one or more of H, Li, Na, K, and NH₄, Me is one or more of Ti, Cr, Mn, Fe, Co, Ni, V, Cu, and Zn, X is one or more of F, Cl, and Br, 0 < b ≤ 4, 0 < c ≤ 2, and 1 ≤ d ≤ 3; the sodium-containing transition metal oxide is NaₐM_{b}N_{c}Fe_{d}MnₑO₂, where M and N include at least one of Sc, Ti, V, Cr, Co, Ni, Cu, Zn, Zr, Nb, Mo, Sn, Hf, Ta, W, and Pb, 0.05 ≤ b ≤ 0.2, 0.2 ≤ c ≤ 0.3, 0.2 ≤ d ≤ 0.3, 0.3 ≤ e ≤ 0.4, and 0.75 ≤ a/(b + c + d + e) ≤ 1.

In some embodiments, the positive electrode active material includes a sodium transition metal oxide, and the sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0 < m ≤ 1, 0 ≤ n ≤ 0.5, 0 ≤ o < 0.5, 0 ≤ p ≤ 0.5, 0 < q ≤ 0.68, n + o + p + q = 1, and 0 ≤ s < 0.2.

The positive electrode active material sodium transition metal oxide has a high voltage. The anionic oxygen in the sodium transition metal oxide produces a large amount of proton hydrogen while contributing to the capacity, which accelerates the oxidation and gas production of the unstable components of the negative electrode, leading to severe gas production on the negative electrode side. Through the combined action of the negative electrode plate provided in the examples of the present application and the fluorinated carbonate compound in the electrolytic solution, the gas production of the battery can be effectively reduced while the battery capacity and energy density are improved.

In some embodiments, the sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

In some embodiments, the electrolytic solution further includes a second component, and the second component is one or more of vinylene carbonate, vinyl ethylene carbonate, 1,3-propanesultone, 1,3-propenesultone, ethylene sulfate, maleic anhydride, succinic anhydride, sodium difluoro(oxalato)borate, triallyl phosphate, sodium bis(oxalato)borate, sodium tetrafluoro(oxalato)phosphate, sodium difluorobis(oxalato)phosphate, sodium difluorophosphate, and sodium fluorosulfonate.

The component of the SEI film formed at the interface of the negative electrode in the sodium secondary battery mainly includes sodium alkyl carbonate and sodium carbonate. However, compared with lithium alkyl carbonate, sodium alkyl carbonate has higher solubility in the solvent for the electrolytic solution, which makes the SEI film of the sodium secondary battery very unstable. The electrolytic solution continuously undergoes side reactions with the negative electrode, resulting in poor cycle performance of the secondary battery. The second component containing an unsaturated functional group can be reduced to a film prior to the solvent at the negative electrode, cooperate with the fluorinated carbonate compound to jointly inhibit the formation of easily soluble substances such as sodium alkyl carbonate, and act together with the negative electrode plate, thereby reducing the gas production of the battery and improving the cycling stability of the battery.

In some embodiments, based on the total mass of the electrolytic solution, the mass proportion of the second component is 0.01% to 10%. In some embodiments, based on the total mass of the electrolytic solution, the mass proportion of the second component is 0.1% to 5%.

In some embodiments, based on the total mass of the electrolytic solution, the mass proportion of the second component is optionally 0.01%, 0.1%, 1%, 2%, 3%, 4%, 5%, 6%, 7%, 8%, 9%, 10%, or any numerical value therebetween.

When the mass proportion of the second component is within the above range, the thickness of the SEI film can be controlled while the gas production of the battery is improved, thereby achieving both low impedance and low gas production of the battery.

In some embodiments, the electrolytic solution includes an electrolyte salt selected from at least one of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), where RF represents C_{b}F_{2b+1}, and b is an integer from 1 to 10, optionally an integer from 1 to 3.

In some embodiments, the electrolyte salt is selected from one or more of NaPF₆, NaN(SO₂F)₂, NaN(CF₃SO₂)₂, NaB(C₂O₄)₂, and NaBF₂(C₂O₄). In some embodiments, the electrolyte salt is selected from one or more of NaPF₆, NaN(SO₂RF)₂, and NaBF₂(C₂O₄). In some embodiments, RF is -CF₃, -C₂F₅, or -CF₂CF₂CF₃.

In some embodiments, the electrolytic solution includes a solvent including at least one of a chain carbonate, a chain carboxylate, cyclic carbonic acid, an ether solvent, a sulfone solvent, and a nitrile solvent. In some embodiments, the chain carbonate includes at least one of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonate includes at least one of dimethyl carbonate (DMC), diethyl carbonate (DEC), ethyl methyl carbonate (EMC), and methyl propyl carbonate (MPC). In some embodiments, the chain carboxylate includes at least one of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylate includes at least one of methyl propionate (MP), ethyl propionate (EP), propyl propionate (PP), methyl acetate (MA), ethyl acetate (EA), and propyl acetate (PA). In some embodiments, the ether solvent includes at least one of dioxolane (DOL), tetrahydrofuran (THF), 2-methyl tetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

### [Positive Electrode Plate]

A positive electrode plate generally includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil or an aluminum foil may be used. The composite current collector may include a polymer material base layer and a metal layer formed on at least one surface of the polymer material substrate. The composite current collector may be formed by forming a metal material (copper, copper alloy, aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Separator]

In some embodiments, the secondary battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured to package the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

In the present application, the shape of the sodium secondary battery includes, but is not limited to, a cylindrical shape, a prismatic shape, or any other shape. For example, FIG. 2 shows a sodium secondary battery 5 having a prismatic structure as one example.

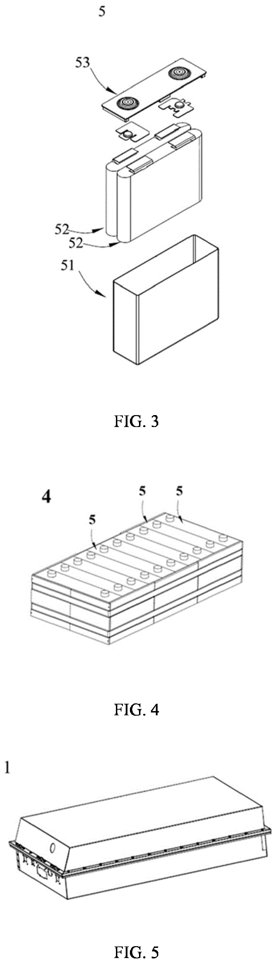

In some embodiments, referring to FIG. 3, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution infiltrates into the electrode assembly 52. The number of the electrode assemblies 52 included in the sodium secondary battery 5 may be one or more, and those skilled in the art can select the number according to specific and actual needs.

In some embodiments, the sodium secondary battery may be assembled into a battery module. The number of sodium secondary batteries included in the battery module may be one or more, and the specific number may be selected by those skilled in the art based on the use and capacity of the battery module.

FIG. 4 shows a battery module 4 as one example. Referring to FIG. 4, in the battery module 4, a plurality of sodium secondary batteries 5 may be sequentially arranged in the length direction of the battery module 4. Certainly, the arrangement may also be in any other manner. Further, the plurality of sodium secondary batteries 5 may be fixed by a fastener.

Optionally, the battery module 4 may further include a shell having an accommodating space in which the plurality of sodium secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

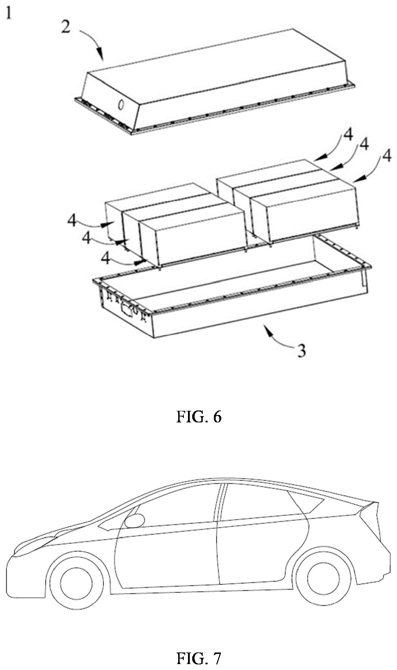

FIGs. 5 and 6 show a battery pack 1 as one example. Referring to FIGs. 5 and 6, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the sodium secondary battery, the battery module, or the battery pack provided in the present application. The sodium secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a sodium secondary battery, a battery module, or a battery pack may be selected based on the use requirements of the electric device.

FIG. 7 shows an electric device as one example. The electric device is a pure electric vehicle, a hybrid electric vehicle, a plug-in hybrid electric vehicle, or the like. To meet the requirements of the electric device for high power and high energy density of the sodium secondary battery, a battery pack or a battery module may be used.

As another example, the device may be a mobile phone, a tablet computer, a laptop computer, or the like. The device is generally required to be light and thin, and a sodium secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### I. Preparation Method

### Example 1:

### 1) Electrolytic solution

In a glove box under an argon atmosphere (H₂O content < 10 ppm, O₂ content < 1 ppm), ethylene carbonate (EC) and ethyl methyl carbonate (EMC) were mixed in a mass ratio of 30/70, and a 1 M NaPF₆ sodium salt was dissolved. Then, fluoroethylene carbonate was added, and the mixture was uniformly stirred to prepare an electrolytic solution. Based on the total mass of the electrolytic solution, the mass proportion of the fluoroethylene carbonate was 1%.

### 2) Preparation of positive electrode active material

Preparation of Na_{7/9}Cu_{2/9}Fe_{1/9}Mn_{2/3}O₂: Precursors of Na₂CO₃ (0.39 mol), CuO (0.22 mol), Fe₂O₃ (0.06 mol), and MnO₂ (0.67 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage.

### 3) Preparation of positive electrode plate C

The positive electrode active material Na_{7/9}Cu_{2/9}Fe_{1/9}Mn_{2/3}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm at a density of 0.28 g (dry weight)/1540.25 mm². The aluminum foil was aired at room temperature, transferred to an oven for drying at 120 °C for 1 h, and then subjected to cold pressing and slitting to obtain a positive electrode plate.

### 4) Preparation of negative electrode active material

The biomass material coconut shell was calcined in a tube furnace under an argon atmosphere at 800 °C for 2 h, then washed with hydrochloric acid and deionized water, and dried. The biomass material was ground for 2 h and then calcined in a tube furnace under an argon atmosphere at 1550 °C for 4 h to obtain a target material H2 with a particle size of 10 µm. Tests showed that the actual discharge-specific capacity of the material in the voltage range of 0.5 V to 1 V was 40 mAh/g, and the actual discharge-specific capacity of the material in the voltage range of 0.1 V to 0.005 V was 220 mAh/g. For the specific test method, reference is made to the "Test for actual discharge-specific capacity of negative electrode active material" section below.

### 5) Preparation of negative electrode plate C

The negative electrode active material H2, a conductive agent acetylene black, a binder styrene-butadiene rubber (SBR), and a thickener sodium carboxymethylcellulose (CMC-Na) were well stirred and uniformly mixed in a deionized water solvent system at a weight ratio of 90:4:4:2. A certain amount of CaO was added, so that the mass proportion of calcium in the slurry dry material (i.e., the total mass of the negative electrode active material H2, the conductive agent acetylene black, the binder styrene-butadiene rubber (SBR), the thickener sodium carboxymethylcellulose (CMC-Na), and CaO) was 100 ppm, and a negative electrode slurry was obtained. The negative electrode slurry was uniformly applied onto a negative electrode current collector copper foil with a thickness of 13 µm in an amount of 0.14 g (dry weight)/1540.25 mm². The copper foil was aired at room temperature, transferred to an oven for drying at 120 °C for 1 h, and then subjected to cold pressing and slitting to obtain a negative electrode plate.

### 6) Separator

A porous polymer film made of 9 µm polyethylene (PE) was used as the separator.

### 7) Preparation of battery

The positive electrode plate, the separator, and the negative electrode plate were stacked in sequence, with the separator positioned between the positive electrode plate and the negative electrode plate to isolate the two. The stack was wound to obtain a bare cell. The bare cell was welded to the tabs and placed in an outer packaging, and the electrolytic solution prepared above was injected into the dried battery cell. After procedures such as packaging, standing, formation, shaping, and capacity testing, the sodium secondary battery product of Example 1 was obtained.

The preparation methods for the sodium secondary batteries in Examples 2 to 4 were substantially the same as that in Example 1, except that the type of the fluorinated carbonate compound was adjusted. For specific parameters, reference is made to Table 1.

The preparation methods for the sodium secondary batteries in Examples 5 to 8 were substantially the same as that in Example 1, except that the mass proportion of the fluorinated carbonate compound was adjusted. For specific parameters, reference is made to Table 1.

The preparation methods for the sodium secondary batteries in Examples 9 to 12 were substantially the same as that in Example 1, except that the preparation processes of the negative electrode active material and the negative electrode plate were adjusted to adjust the actual discharge-specific capacity of the negative electrode active material in the negative electrode plate in the voltage range of 1.0 V to 0.5 V and the actual discharge-specific capacity of the material in the voltage range of 0.1 V to 0.005 V. For specific parameters, reference is made to Table 1, and the preparation processes are as follows:

In Example 9, the actual discharge-specific capacity of the negative electrode active material in the negative electrode plate A measured by using a three-stage stepwise discharge method in which the material was first discharged at the rate of 0.05C and then discharged at currents of 40 µA and 10 µA in the voltage range of 1.0 V to 0.5 V was 9 mAh/g. The actual discharge-specific capacity of the material measured by using the three-stage stepwise discharge method in which the material was first discharged at the rate of 0.05C and then discharged at the currents of 40 µA and 10 µA in the voltage range of 0.1 V to 0.005 V was 300 mAh/g. For the detailed test method, reference is made to the test method section below, and the preparation method for the negative electrode plate is as follows:

The biomass material coconut shell was calcined in a tube furnace under an argon atmosphere at 800 °C for 2 h, then washed with hydrochloric acid and deionized water, and dried. The biomass material was ground for 2 h and then calcined in a tube furnace under an argon atmosphere at 1650 °C for 6 h to obtain a target material H3 with a particle size of 20 µm.

The negative electrode active material H3, a conductive agent acetylene black, a binder styrene-butadiene rubber (SBR), and a thickener sodium carboxymethylcellulose (CMC-Na) were well stirred and uniformly mixed in a deionized water solvent system at a weight ratio of 90:4:4:2. A certain amount of CaO was added to enable the mass proportion of calcium in the dry material to be 100 ppm to obtain a negative electrode slurry. The negative electrode slurry was uniformly applied onto a negative electrode current collector copper foil with a thickness of 13 µm in an amount of 0.14 g (dry weight)/1540.25 mm². The copper foil was aired at room temperature, transferred to an oven for drying at 120 °C for 1 h, and then subjected to cold pressing and slitting to obtain a negative electrode plate.

In Example 10, the actual discharge-specific capacity of the negative electrode active material in the negative electrode plate B in the voltage range of 1.0 V to 0.5 V was 18.3 mAh/g, and the actual discharge-specific capacity of the material in the voltage range of 0.1 V to 0.005 V was 250 mAh/g. For the detailed test method, reference is made to the test method section below, and the preparation method is as follows:

The negative electrode active material (30 wt% H2 and 70 wt% H3), a conductive agent acetylene black, a binder styrene-butadiene rubber (SBR), and a thickener sodium carboxymethylcellulose (CMC-Na) were well stirred and uniformly mixed in a deionized water solvent system at a weight ratio of 90:4:4:2. A certain amount of CaO was added to enable the mass proportion of calcium in the dry material to be 100 ppm to obtain a negative electrode slurry. The negative electrode slurry was uniformly applied onto a negative electrode current collector copper foil with a thickness of 13 µm in an amount of 0.14 g (dry weight)/1540.25 mm². The copper foil was aired at room temperature, transferred to an oven for drying at 120 °C for 1 h, and then subjected to cold pressing and slitting to obtain a negative electrode plate.

In Example 11, the actual discharge-specific capacity of the negative electrode active material in the negative electrode plate E measured by using a three-stage stepwise discharge method in which the material was first discharged at the rate of 0.05C and then discharged at currents of 40 µA and 10 µA in the voltage range of 1.0 V to 0.5 V was 140 mAh/g. The actual discharge capacity of the material measured by using the three-stage stepwise discharge method in which the material was first discharged at the rate of 0.05C and then discharged at the currents of 40 µA and 10 µA in the voltage range of 0.1 V to 0.005 V was 100 mAh/g. For the detailed test method, reference is made to the test method section below, and the preparation method for the negative electrode plate is as follows:

The biomass material coconut shell was calcined in a tube furnace under an argon atmosphere at 800 °C for 2 h, then washed with hydrochloric acid and deionized water, and dried. The biomass material was ground for 2 h and then calcined in a tube furnace under an argon atmosphere at 1150 °C for 2 h to obtain a target material H1 with a particle size of 2 µm.

The negative electrode active material H1, a conductive agent acetylene black, a binder styrene-butadiene rubber (SBR), and a thickener sodium carboxymethylcellulose (CMC-Na) were well stirred and uniformly mixed in a deionized water solvent system at a weight ratio of 90:4:4:2. A certain amount of CaO was added to enable the mass proportion of calcium in the dry material to be 100 ppm to obtain a negative electrode slurry. The negative electrode slurry was uniformly applied onto a negative electrode current collector copper foil with a thickness of 13 µm in an amount of 0.14 g (dry weight)/1540.25 mm². The copper foil was aired at room temperature, transferred to an oven for drying at 120 °C for 1 h, and then subjected to cold pressing and slitting to obtain a negative electrode plate.

In Example 12, the actual discharge-specific capacity of the negative electrode active material in the negative electrode plate D measured by using a three-stage stepwise discharge method in which the material was first discharged at the rate of 0.05C and then discharged at currents of 40 µA and 10 µA in the voltage range of 1.0 V to 0.5 V was 70 mAh/g. The actual discharge-specific capacity of the material measured by using the three-stage stepwise discharge method in which the material was first discharged at the rate of 0.05C and then discharged at the currents of 40 µA and 10 µA in the voltage range of 0.1 V to 0 V was 200 mAh/g. For the detailed test method, reference is made to the test method section below, and the preparation method is as follows:

The negative electrode active material (30 wt% H1 and 70 wt% H2), a conductive agent acetylene black, a binder styrene-butadiene rubber (SBR), and a thickener sodium carboxymethylcellulose (CMC) were well stirred and uniformly mixed in a deionized water solvent system at a weight ratio of 90:4:4:2. A certain amount of CaO was added to enable the mass proportion of calcium in the dry material to be 100 ppm to obtain a negative electrode slurry. The negative electrode slurry was uniformly applied onto a negative electrode current collector copper foil with a thickness of 8 µm in an amount of 0.14 g (dry weight)/1540.25 mm². The copper foil was aired at room temperature, transferred to an oven for drying at 120 °C for 1 h, and then subjected to cold pressing and slitting to obtain a negative electrode plate.

The preparation methods for the sodium secondary batteries in Examples 13 to 18 were substantially the same as that in Example 1, except that the mass proportion of the calcium element in the negative electrode film layer was adjusted by adding different amounts of CaO to the negative electrode slurry. For specific parameters, reference is made to Table 1.

The preparation methods for the sodium secondary batteries in Examples 19 to 22 were substantially the same as that in Example 1, except that the preparation processes of the positive electrode active material and the positive electrode plate were adjusted to adjust the mass proportion of the copper element in the positive electrode active material. For specific parameters, reference is made to Table 1, and the preparation processes are as follows:

In Example 19, the mass proportion of the copper element of the positive electrode active material in the positive electrode plate A was 0%, and the preparation method was as follows:

Preparation of Na_{1/2}Fe_{1/2}Mn_{1/2}O₂: Precursors of Na₂CO₃ (0.25 mol), Fe₂O₃ (0.25 mol), and MnO₂ (0.5 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage.

The positive electrode active material Na_{1/2}Fe_{1/2}Mn_{1/2}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

In Example 20, the mass proportion of the copper element of the positive electrode active material in the positive electrode plate B was 6.5%, and the preparation method was as follows:

The positive electrode active material (50 wt% Na_{1/2}Fe_{1/2}Mn_{1/2}O₂ and 50 wt% Na_{7/9}Cu_{2/9}Fe_{1/9}Mn_{2/3}O₂), a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

In Example 21, the mass proportion of the copper element of the positive electrode active material in the positive electrode plate E was 23%, and the preparation method was as follows:

Preparation of Na_{9/10}Cu_{2/5}Fe_{1/10}Mn_{1/2}O₂: Precursors of Na₂CO₃ (0.45 mol), CuO (0.4 mol), Fe₂O₃ (0.05 mol), and MnO₂ (0.5 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage.

The positive electrode active material Na_{9/10}Cu_{2/5}Fe_{1/10}Mn_{1/2}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

In Example 22, the mass proportion of the copper element of the positive electrode active material in the positive electrode plate D was 18%, and the preparation method was as follows:

The positive electrode active material (50 wt% Na_{7/9}Cu_{2/9}Fe_{1/9}Mn_{2/3}O₂ and 50 wt% Na_{9/10}Cu_{2/5}Fe_{1/10}Mn_{1/2}O₂), a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

The preparation methods for the sodium secondary batteries in Examples 23 to 25 were substantially the same as that in Example 1, except that the second component was added. For specific parameters, reference is made to Table 1.

The preparation method for the sodium secondary battery in Comparative Example 1 was substantially the same as that in Example 9, except that the mass proportion of fluoroethylene carbonate in the electrolytic solution in Comparative Example 1 was 0.01%.

The preparation method for the sodium secondary battery in Comparative Example 2 was substantially the same as that in Example 1, except that the electrolytic solution did not include the fluorinated carbonate compound.

### II. Battery Performance Test

### 1. Volume change rate under high-temperature storage

At 25 °C, the new sodium secondary batteries prepared in the examples and comparative examples were left to stand for 5 min, charged to 4.0 V at a constant current rate of 1C, charged at a constant voltage until the current was less than or equal to 0.05C, then left to stand for 5 min, and discharged to 1.5 V at a constant current rate of 1C. The volume V1 of the battery was tested by the water displacement method. The battery was then placed in an oven at 60 °C and stored for 2 months, and then taken out, with the test volume being V2. The volume change rate of the battery = (V2 - V1)/V1 × 100%.

### 2. Low-temperature charging performance at -10 °C

A three-electrode battery containing a reference was prepared. The reference electrode was sodium vanadium phosphate. At 25 °C, the battery was charged at a constant current of 1C to a voltage of 4.0 V, charged at a constant voltage until the current was less than or equal to 0.05C, then left to stand for 5 min, and discharged at a constant current rate of 1C to 1.5 V. The discharge capacity was recorded as C1. The battery was then placed in an environment at -10 °C and left to stand for 2 h, and charged at a constant current of 0.1C to a voltage of 4.0 V. The charge capacity, before the potential of the negative electrode compared with the reference potential was -3.377 V, was obtained and recorded as C2, and the charging capacity of the battery at -10 °C = C2/C1 × 100%.

### 3. Mass energy density

Capacity test of the battery cell: The battery cell was allowed to stand at 25 °C for 2 h to ensure that the temperature of the battery cell was 25 °C. At 25 °C, the battery cell was charged at 0.1C to a charge cut-off voltage, and constant-voltage charging was continued at the charge cut-off voltage until the current reached 0.05C, at which point charging was terminated (where C represents the rated capacity of the battery cell). The battery cell was allowed to stand at 25 °C for 1 h. At 25 °C, the battery cell was discharged at 0.1C to a discharge cut-off voltage, and the total discharge capacity and total discharge energy of the battery cell were recorded as CO and E0, respectively.

Battery cell weight measurement: The battery cell was placed on an electronic balance until the weight stabilized, and the battery cell weight M0 was recorded.

Energy density calculation: The energy density of the battery cell was calculated as: battery cell discharge energy E0/battery cell weight M0.

### 4. Cycle capacity retention rate of battery

At 25 °C, the prepared battery was charged at a constant current of 1C to 4.0 V, then charged at a constant voltage of 4.0 V until the current dropped to 0.05C, left to stand for 5 min, and then discharged at a constant current of 1C to 1.5 V. This was the first charging/discharging cycle of the battery, and the discharge capacity of this cycle was recorded as the discharge capacity of the first cycle of the battery (C0). The above procedure was repeated for the same battery, the discharge capacity (C1) of the battery after 400 cycles was obtained, and the capacity retention rate after 400 cycles = C1/C0 × 100%.

### 5. Test for actual discharge-specific capacity of negative electrode active material

The negative electrode plates in the comparative examples and the examples were punched into small discs with a diameter of 14 mm to be used as a positive electrode in a button battery, a sodium metal sheet was used as a negative electrode, and a polypropylene film was used as a separator. A 1.3 mol/L sodium hexafluorophosphate solution was used as an electrolytic solution, and solvents in the electrolytic solution included ethylene carbonate, dimethyl carbonate, and ethyl methyl carbonate in a mass ratio of 1:2:2. The solvents were used as a test electrolytic solution to assemble the button battery, and the battery was subjected to a constant current charging and discharging test in the voltage range of 0.005 V to 2 V. In the discharging process, the battery was discharged to 0.005 V at a constant current rate of 0.05C, discharged to 0.005 V at a constant current rate of 40 µA after standing until the voltage returned to a stable value, and discharged to 0.005 V at a constant current rate of 10 µA after standing until the voltage returned to a stable value; in the charging process, the battery was charged to 2 V at a constant current rate of 0.05C. In the second charging and discharging cycle, the total discharge capacity (mAh) in the discharging process in the voltage range of 1.0 V to 0.5 V was divided by the mass (g) of the negative electrode active material in the negative electrode plate, and this was denoted as the actual discharge-specific capacity (in mAh/g) of the negative electrode active material at 1.0 V to 0.5 V. In the second charging and discharging cycle, the total discharge capacity (mAh) in the discharging process in the voltage range of 0.1 V to 0.005 V was divided by the mass (g) of the negative electrode active material in the negative electrode plate, and this was denoted as the actual discharge-specific capacity (in mAh/g) of the negative electrode active material at 0.1 V to 0.005 V.

The theoretical discharge-specific capacity of the negative electrode active material hard carbon was 300 mAh/g.

### 6. Determination of mass proportion of calcium element in negative electrode film layer

The mass proportion of the calcium element in the negative electrode film layer can be determined by inductively coupled plasma atomic emission spectrometry according to General Rules EPA 6010D-2014. The mass proportion of the silicon element in the negative electrode film layer was calculated by dividing the mass of the calcium element in the negative electrode film layer sample by the mass of the negative electrode film layer sample.

### 7. Determination of mass proportion of copper element in positive electrode active material

The mass proportion of the Cu element in the positive electrode active material can be determined by inductively coupled plasma atomic emission spectrometry according to General Rules EPA 6010D-2014. The mass proportion of the copper element in the positive electrode active material was calculated by dividing the mass of the copper element in the positive electrode active material sample by the mass of the positive electrode active material sample.

### III. Analysis of Test Results of Examples and Comparative Examples

The batteries of examples and comparative examples were prepared according to the methods described above, and various performance parameters were measured. The results are shown in the table below.

**Table 1**

| Serial number | | Electrode Plate | | | Electrolytic solution | |
|---|---|---|---|---|---|---|
| | | | | | First component Fluorinated carbonate compound | Second component |
| | Positive electrode plate | Negative electrode plate | Composition | Mass proportion b/% | Composition | Mass proportion /% |
| Example 1 | Positive electrode plate C | Negative electrode plate C | Formula II-1 | 1 | / | / |
| Example 2 | Positive electrode plate C | Negative electrode plate C | Formula II-2 | 1 | / | / |
| Example 3 | Positive electrode plate C | Negative electrode plate C | Formula II-5 | 1 | / | / |
| Example 4 | Positive electrode plate C | Negative electrode plate C | Formula II-10 | 1 | / | / |
| Example 5 | Positive electrode plate C | Negative electrode plate C | Formula II-1 | 0.05 | / | / |
| Example 6 | Positive electrode plate C | Negative electrode plate C | Formula II-1 | 0.2 | / | / |
| Example 7 | Positive electrode plate C | Negative electrode plate C | Formula II-1 | 5 | / | / |
| Example 8 | Positive electrode plate C | Negative electrode plate C | Formula II-1 | 10 | / | / |
| Example 9 | Positive electrode plate C | Negative electrode plate A | Formula II-1 | 1 | / | / |
| Example 10 | Positive electrode plate C | Negative electrode plate B | Formula II-1 | 1 | / | / |
| Example 11 | Positive electrode plate C | Negative electrode plate E | Formula II-1 | 1 | / | / |
| Example 12 | Positive electrode plate C | Negative electrode plate D | Formula II-1 | 1 | / | / |
| Example 13 | Positive electrode plate C | Negative electrode plate C | Formula II-1 | 1 | / | / |
| Example 14 | Positive electrode plate C | Negative electrode plate C | Formula II-1 | 1 | / | / |
| Example 15 | Positive electrode plate C | Negative electrode plate C | Formula II-1 | 1 | / | / |
| Example 16 | Positive electrode plate C | Negative electrode plate C | Formula II-1 | 1 | / | / |
| Example 17 | Positive electrode plate C | Negative electrode plate C | Formula II-1 | 1 | / | / |
| Example 18 | Positive electrode plate C | Negative electrode plate C | Formula II-1 | 1 | / | / |
| Example 19 | Positive electrode plate A | Negative electrode plate C | Formula II-1 | 1 | / | / |
| Example 20 | Positive electrode plate B | Negative electrode plate C | Formula II-1 | 1 | / | / |
| Example 21 | Positive electrode plate E | Negative electrode plate C | Formula II-1 | 1 | / | / |
| Example 22 | Positive electrode plate D | Negative electrode plate C | Formula II-1 | 1 | / | / |
| Example 23 | Positive electrode plate C | Negative electrode plate C | Formula II-1 | 1 | 1,3-Propenesultone | 0.5 |
| Example 24 | Positive electrode plate C | Negative electrode plate C | Formula II-1 | 1 | Sodium difluoro(oxalato) borate | 0.5 |
| Example 25 | Positive electrode plate C | Negative electrode plate C | Formula II-1 | 1 | Sodium difluorophosphate | 0.5 |
| Comparative Example 1 | Positive electrode plate C | Negative electrode plate A | Formula II-1 | 0.01 | / | / |
| Comparative Example 2 | Positive electrode plate C | Negative electrode plate C | / | / | / | / |

**Table 2**

| Serial number | Negative electrode plate | | | | | | | Positive electrode plate |
|---|---|---|---|---|---|---|---|---|
| | Actual discharge-specific capacity (mAh/g) at 1.0 V to 0.5 V | Ratio a of actual discharge-specific capacity to theoretical discharge-specific capacity (300 mAh/g) at 1.0 V to 0.5 V | a/b | Actual discharge-specific capacity at 0.1 V to 0.005 V /mAh/g | Ratio c of actual discharge-specific capacity to theoretical discharge-specific capacity (300 mAh/g) at 0.1 V to 0.005 V | Mass proportion d of Ca /ppm | d/c | Mass proportion f of Cu /% |
| Example 1 | 40 | 0.13 | 13.33 | 220 | 0.73 | 100 | 1.4E-04 | 13 |
| Example 2 | 40 | 0.13 | 13.33 | 220 | 0.73 | 100 | 1.4E-04 | 13 |
| Example 3 | 40 | 0.13 | 13.33 | 220 | 0.73 | 100 | 1.4E-04 | 13 |
| Example 4 | 40 | 0.13 | 13.33 | 220 | 0.73 | 100 | 1.4E-04 | 13 |
| Example 5 | 40 | 0.13 | 266.67 | 220 | 0.73 | 100 | 1.4E-04 | 13 |
| Example 6 | 40 | 0.13 | 66.67 | 220 | 0.73 | 100 | 1.4E-04 | 13 |
| Example 7 | 40 | 0.13 | 2.67 | 220 | 0.73 | 100 | 1.4E-04 | 13 |
| Example 8 | 40 | 0.13 | 1.33 | 220 | 0.73 | 100 | 1.4E-04 | 13 |
| Example 9 | 9 | 0.03 | 3.00 | 300 | 1.00 | 100 | 1.0E-04 | 13 |
| Example 10 | 18.3 | 0.06 | 6.10 | 250 | 0.83 | 100 | 1.2E-04 | 13 |
| Example 11 | 140 | 0.47 | 46.67 | 100 | 0.33 | 100 | 3.0E-04 | 13 |
| Example 12 | 70 | 0.23 | 23.33 | 200 | 0.67 | 100 | 1.5E-04 | 13 |
| Example 13 | 40 | 0.13 | 13.33 | 220 | 0.73 | 2 | 2.7E-06 | 13 |
| Example 14 | 40 | 0.13 | 13.33 | 220 | 0.73 | 10 | 1.4E-05 | 13 |
| Example 15 | 40 | 0.13 | 13.33 | 220 | 0.73 | 40 | 5.5E-05 | 13 |
| Example 16 | 40 | 0.13 | 13.33 | 220 | 0.73 | 1000 | 1.4E-03 | 13 |
| Example 17 | 40 | 0.13 | 13.33 | 220 | 0.73 | 2300 | 3.1E-03 | 13 |
| Example 18 | 40 | 0.13 | 13.33 | 220 | 0.73 | 3000 | 4.1E-03 | 13 |
| Example 19 | 40 | 0.13 | 13.33 | 220 | 0.73 | 100 | 1.4E-04 | 0 |
| Example 20 | 40 | 0.13 | 13.33 | 220 | 0.73 | 100 | 1.4E-04 | 6.5 |
| Example 21 | 40 | 0.13 | 13.33 | 220 | 0.73 | 100 | 1.4E-04 | 23 |
| Example 22 | 40 | 0.13 | 13.33 | 220 | 0.73 | 100 | 1.4E-04 | 18 |
| Example 23 | 40 | 0.13 | 13.33 | 220 | 0.73 | 100 | 1.4E-04 | 13 |
| Example 24 | 40 | 0.13 | 13.33 | 220 | 0.73 | 100 | 1.4E-04 | 13 |
| Example 25 | 40 | 0.13 | 13.33 | 220 | 0.73 | 100 | 1.4E-04 | 13 |
| Comparative Example 1 | 9 | 0.03 | 300.00 | 300 | 1.00 | 100 | 1.0E-04 | 13 |
| Comparative Example 2 | 40 | 0.13 | / | 220 | 0.73 | 100 | 1.4E-04 | 13 |
| Note: *where E represents the scientific notation to the power of 10, and 1.4E-04 is 1.4 × 10⁻⁴. | | | | | | | | |

**Table 3**

| Serial number | Battery | | |
|---|---|---|---|
| | Battery volume expansion rate after high-temperature storage /% | Charging performance at - 10 °C /% | Cycle performance /% |
| Example 1 | 17.5 | 85.2 | 86.2 |
| Example 2 | 16.7 | 86.5 | 86.5 |
| Example 3 | 16.2 | 87.2 | 86.7 |
| Example 4 | 15.8 | 87.9 | 87.1 |
| Example 5 | 40.1 | 76.9 | 65.7 |
| Example 6 | 37.1 | 79.5 | 70.9 |
| Example 7 | 16.5 | 84.8 | 86.3 |
| Example 8 | 16.4 | 81.8 | 83.5 |
| Example 9 | 20.9 | 79.1 | 81.7 |
| Example 10 | 16.7 | 80.3 | 86.8 |
| Example 11 | 20.4 | 88.9 | 84.5 |
| Example 12 | 17.9 | 86.4 | 86 |
| Example 13 | 20.4 | 79.2 | 77.4 |
| Example 14 | 19 | 80.5 | 79.9 |
| Example 15 | 17.9 | 83.8 | 85.8 |
| Example 16 | 17.4 | 85.4 | 86.5 |
| Example 17 | 17.2 | 85 | 86.2 |
| Example 18 | 17 | 80.2 | 82.3 |
| Example 19 | 13.8 | 86.2 | 85.1 |
| Example 20 | 14.9 | 85.7 | 85.7 |
| Example 21 | 19.8 | 82.9 | 87.9 |
| Example 22 | 18.1 | 84.1 | 86.8 |
| Example 23 | 12.3 | 89.4 | 90.2 |
| Example 24 | 12.6 | 89 | 88.8 |
| Example 25 | 12.8 | 88.1 | 88.5 |
| Comparative Example 1 | 42.3 | 75.5 | 63.9 |
| Comparative Example 2 | 42.5 | 75.3 | 63.7 |

**Table 4**

| Serial number | Energy density of battery Wh/kg |
|---|---|
| Example 1 | 145.4 |
| Example 9 | 164.3 |
| Example 10 | 152.1 |
| Example 11 | 132.3 |
| Example 12 | 143.2 |

As can be seen from the above results, the sodium secondary batteries in Examples 1 to 25 each included a negative electrode plate and an electrolytic solution. The negative electrode plate included a negative electrode active material, and the ratio of the actual discharge-specific capacity of the negative electrode active material in the voltage range of 1.0 V to 0.5 V to the theoretical discharge-specific capacity of the negative electrode active material was a. The electrolytic solution included a first component, the first component was a fluorinated carbonate compound, and based on the total mass of the electrolytic solution, the mass proportion of the fluorinated carbonate compound was b; a and b satisfied: 1 ≤ a/b ≤ 270.

As can be seen from the comparison between the examples and the comparative examples, when a and b satisfy: 1 ≤ a/b ≤ 270, the battery exhibits a low battery volume expansion rate after high-temperature storage, and excellent low-temperature charging performance and room-temperature cycle capacity retention rate.

As can be seen from the examples, when a and b satisfy 1 ≤ a/b ≤ 100, the volume expansion rate, the low-temperature charging performance, and the room-temperature cycle capacity retention rate of the battery are further improved.

As can be seen from Example 1 and Examples 5 to 8, based on the total mass of the electrolytic solution, when the mass proportion b of the fluoroethylene carbonate in the electrolytic solution is 0.05% to 10%, the battery exhibits a low battery volume expansion rate after high-temperature storage, and excellent low-temperature charging performance and room-temperature cycle capacity retention rate. When the mass proportion b of the fluoroethylene carbonate in the electrolytic solution is 0.2% to 10%, the volume expansion rate of the battery after high-temperature storage can be further reduced, and the low-temperature charging performance and the room-temperature cycle capacity retention rate can be improved.

As can be seen from Example 1 and Examples 9 to 12, when the actual discharge-specific capacity of the negative electrode active material in the voltage range of 1.0 V to 0.5 V is 9 mAh/g to 140 mAh/g, and the actual discharge-specific capacity of the material in the voltage range of 0.1 V to 0.005 V is 100 mAh/g to 300 mAh/g, the battery exhibits a low battery volume expansion rate after high-temperature storage, and excellent low-temperature charging performance and room-temperature cycle capacity retention rate. When the discharge-specific capacity of the negative electrode active material in the voltage range of 1.0 V to 0.5 V is 18 mAh/g to 70 mAh/g, and the discharge-specific capacity of the material in the voltage range of 1.0 V to 0.005 V is 200 mAh/g to 250 mAh/g, the battery can balance a low volume expansion rate of the battery after high-temperature storage, excellent low-temperature charging performance and room-temperature cycle capacity retention rate, and high energy density.

As can be seen from Example 1 and Examples 9 to 18, when the mass proportion of the calcium element in the negative electrode film layer is d based on the total mass of the negative electrode film layer, the ratio of the actual discharge-specific capacity of the negative electrode active material in the voltage range of 0.1 V to 0.005 V to the theoretical discharge-specific capacity of the negative electrode active material is c, and d and c satisfy: d/c = 2.5 × 10-6 ≤ d/c ≤ 4.5 × 10-3, the battery exhibits a low battery volume expansion rate after high-temperature storage, and excellent low-temperature charging performance and room-temperature cycle capacity retention rate. When d and c satisfy 5.5 × 10-5 ≤ d/c ≤ 3.1 × 10-3, the battery balances both a low battery volume expansion rate after high-temperature storage, and excellent low-temperature charging performance and room-temperature cycle capacity retention rate.

As can be seen from Example 1 and Examples 13 to 18, when the mass proportion d of the calcium element in the negative electrode film layer is 40 ppm to 3000 ppm based on the total mass of the negative electrode film layer, the battery volume expansion rate after high-temperature storage can be further reduced, and the low-temperature charging performance and room-temperature cycle capacity retention rate can be further improved.

As can be seen from Example 1 and Examples 19 to 22, when the mass proportion of the copper element is 0% to 23% based on the total mass of the positive electrode active material, the battery exhibits a low battery volume expansion rate after high-temperature storage, and excellent low-temperature charging performance and room-temperature cycle capacity retention rate. When the mass proportion of the copper element is 6.5% to 18%, the battery balances both a low battery volume expansion rate after high-temperature storage, and excellent low-temperature charging performance and room-temperature cycle capacity retention rate.

As can be seen from Example 1 and Examples 23 to 25, the addition of the second component to the electrolytic solution allows the battery to exhibit a lower battery volume expansion rate after high-temperature storage, and a more excellent low-temperature charging performance and room-temperature cycle capacity retention rate.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A sodium secondary battery, comprising:
a negative electrode plate, wherein the negative electrode plate comprises a negative electrode active material, and a ratio of an actual discharge-specific capacity of the negative electrode active material measured by using a three-stage stepwise discharge method in which the material is first discharged at a rate of 0.05C and then discharged at currents of 40 µA and 10 µA in a voltage range of 1.0 V to 0.5 V to a theoretical discharge-specific capacity of the negative electrode active material is denoted as a; and
an electrolytic solution, wherein the electrolytic solution comprises a first component, the first component is a fluorinated carbonate compound, and based on a total mass of the electrolytic solution, a mass proportion of the fluorinated carbonate compound is b;
a and b satisfy: 1 ≤ a/b ≤ 270.

2. The sodium secondary battery according to claim 1, wherein a and b satisfy: 1 ≤ a/b ≤ 100.

3. The sodium secondary battery according to claim 1, wherein the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is 9 mAh/g to 140 mAh/g.

4. The sodium secondary battery according to claim 1, wherein the actual discharge-specific capacity of the negative electrode active material measured by using the three-stage stepwise discharge method in which the material is first discharged at the rate of 0.05C and then discharged at the currents of 40 µA and 10 µA in the voltage range of 1.0 V to 0.5 V is 18 mAh/g to 70 mAh/g.

5. The sodium secondary battery according to claim 1, wherein based on the total mass of the electrolytic solution, the mass proportion b of the fluorinated carbonate compound is 0.05% to 10%.

6. The sodium secondary battery according to claim 1, wherein based on the total mass of the electrolytic solution, the mass proportion b of the fluorinated carbonate compound is 0.2% to 10%.

7. The sodium secondary battery according to claim 1, wherein the fluorinated carbonate compound comprises a compound represented by formula I, 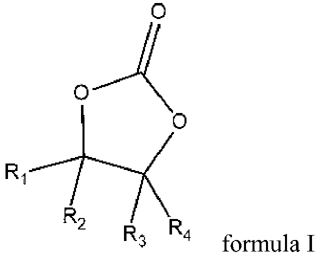 wherein R₁, R₂, R₃, and R₄ each independently comprise at least one of a hydrogen atom, a halogen atom, C₁₋₆ hydrocarbyl, C₁₋₃ haloalkyl, C₁₋₃ alkoxy, C₁₋₃ haloalkoxy, an ester group, cyano, a sulfonic acid group, and an isocyanate group; at least one of R₁, R₂, R₃, and R₄ is a fluorine atom.

8. The sodium secondary battery according to any one of claims 1 to 7, wherein the fluorinated carbonate compound comprises at least one of the following compounds:

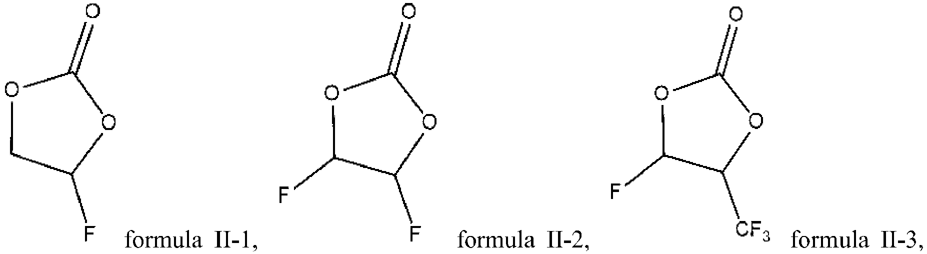

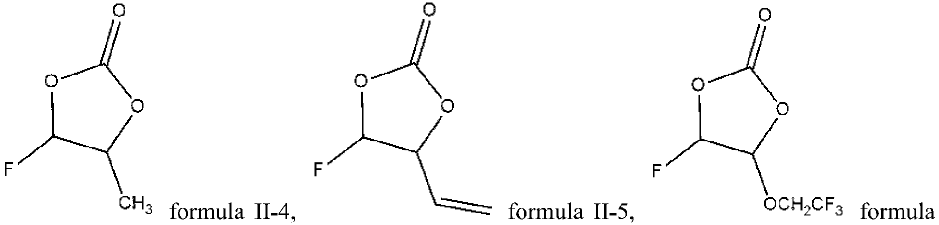

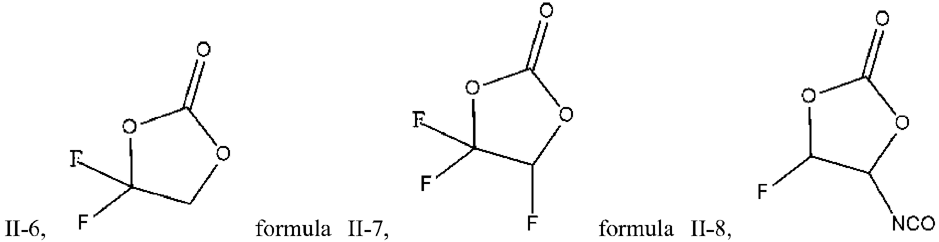

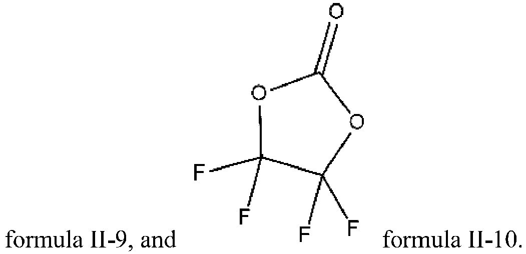

9. The sodium secondary battery according to any one of claims 1 to 7, wherein the negative electrode plate comprises a negative electrode film layer, and the negative electrode film layer contains a calcium element.

10. The sodium secondary battery according to claim 9, wherein based on a total mass of the negative electrode film layer, a mass proportion of the calcium element in the negative electrode film layer is d, the ratio of the actual discharge-specific capacity of the negative electrode active material measured by using the three-stage stepwise discharge method in which the material is first discharged at the rate of 0.05C and then discharged at the currents of 40 µA and 10 µA in a voltage range of 0.1 V to 0.005 V to the theoretical discharge-specific capacity of the negative electrode active material is c, and d and c satisfy: 2.5 × 10⁻⁶ ≤ d/c ≤ 4.5 × 10⁻³.

11. The sodium secondary battery according to claim 10, wherein d and c satisfy: 5.5 × 10⁻⁵ ≤ d/c ≤ 3.1 × 10⁻³.

12. The sodium secondary battery according to claim 9, wherein based on a total mass of the negative electrode film layer, a mass proportion d of the calcium element in the negative electrode film layer is 2 ppm to 3000 ppm.

13. The sodium secondary battery according to claim 9, wherein based on a total mass of the negative electrode film layer, a mass proportion d of the calcium element in the negative electrode film layer is 40 ppm to 2300 ppm.

14. The sodium secondary battery according to any one of claims 1 to 7, wherein the actual discharge-specific capacity of the negative electrode active material measured by using the three-stage stepwise discharge method in which the material is first discharged at the rate of 0.05C and then discharged at the currents of 40 µA and 10 µA in a voltage range of 0.1 V to 0.005 V is 100 mAh/g to 300 mAh/g.

15. The sodium secondary battery according to any one of claims 1 to 7, wherein the actual discharge-specific capacity measured by using the three-stage stepwise discharge method in which the negative electrode active material is first discharged at the rate of 0.05C and then discharged at the currents of 40 µA and 10 µA in a voltage range of 0.1 V to 0.005 V is 200 mAh/g to 250 mAh/g.

16. The sodium secondary battery according to any one of claims 1 to 7, wherein the negative electrode active material comprises hard carbon.

17. The sodium secondary battery according to any one of claims 1 to 7, wherein the sodium secondary battery further comprises a positive electrode plate, and the positive electrode plate comprises a positive electrode active material.

18. The sodium secondary battery according to claim 17, wherein the positive electrode active material further comprises a copper element, and based on a total mass of the positive electrode active material, a mass proportion of the copper element is 0.01% to 23%.

19. The sodium secondary battery according to claim 18, wherein based on the total mass of the positive electrode active material, the mass proportion of the copper element is 6.5% to 18%.

20. The sodium secondary battery according to claim 17, wherein the positive electrode active material comprises a sodium transition metal oxide, and the sodium transition metal oxide comprises NaₘCuₙXₒFeₚMn_{q}O₂₋ₛ, wherein X comprises one or more of Li, Be, B, Mg, Al, K, Ca, Ti, Co, Ni, Zn, Ga, Sr, Y, Nb, Mo, In, Sn, Fe, and Ba, 0 < m ≤ 1, 0 ≤ n ≤ 0.5, 0 ≤ o < 0.5, 0 ≤ p ≤ 0.5, 0 < q ≤ 0.68, n + o + p + q = 1, and 0 ≤ s < 0.2.

21. The sodium secondary battery according to claim 20, wherein the sodium transition metal oxide comprises at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

22. The sodium secondary battery according to any one of claims 1 to 7, wherein the electrolytic solution further comprises a second component, and the second component is one or more of vinylene carbonate, vinyl ethylene carbonate, 1,3-propanesultone, 1,3-propenesultone, ethylene sulfate, maleic anhydride, succinic anhydride, sodium difluoro(oxalato)borate, triallyl phosphate, sodium bis(oxalato)borate, sodium tetrafluoro(oxalato)phosphate, sodium difluorobis(oxalato)phosphate, sodium difluorophosphate, and sodium fluorosulfonate.

23. The sodium secondary battery according to claim 22, wherein based on the total mass of the electrolytic solution, a mass proportion of the second component is 0.01% to 10%.

24. The sodium secondary battery according to claim 22 or 23, wherein based on the total mass of the electrolytic solution, a mass proportion of the second component is 0.1% to 5%.

25. An electric device, comprising the sodium secondary battery according to any one of claims 1 to 24.
